(19) Europäisches Patentamt
European Patent Office
Office européen des brevets

(11) **EP 3 845 392 B1**

(12) **EUROPEAN PATENT SPECIFICATION**

(45) Date of publication and mention of the grant of the patent:
**02.11.2022 Bulletin 2022/44**

(21) Application number: **18931794.4**

(22) Date of filing: **29.08.2018**

(51) International Patent Classification (IPC):
***B32B 38/14*** *(2006.01)* ***B32B 37/12*** *(2006.01)*
***C09D 11/101*** *(2014.01)* ***C09D 11/322*** *(2014.01)*
*B41M 5/00 (2006.01)* *B41M 7/00 (2006.01)*

(52) Cooperative Patent Classification (CPC):
**B32B 37/12; B32B 38/145; C09D 11/101; C09D 11/322;** B32B 2310/08; B32B 2310/0806; B41M 5/0064; B41M 7/0027; B41M 7/0081

(86) International application number:
**PCT/JP2018/032011**

(87) International publication number:
**WO 2020/044475 (05.03.2020 Gazette 2020/10)**

(54) **METHOD FOR PRODUCING PRINTED MATTER**

VERFAHREN ZUR HERSTELLUNG EINES BEDRUCKTEN MATERIALS

PROCÉDÉ DE PRODUCTION DE MATIÈRE IMPRIMÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.07.2021 Bulletin 2021/27**

(73) Proprietor: **KONICA MINOLTA, INC.**
**Tokyo 100-7015 (JP)**

(72) Inventor: **KAWANAMI Tomoe**
**Tokyo 100-7015 (JP)**

(74) Representative: **MFG Patentanwälte**
**Meyer-Wildhagen Meggle-Freund**
**Gerhard PartG mbB**
**Amalienstraße 62**
**80799 München (DE)**

(56) References cited:
**WO-A1-2011/065095** **WO-A1-2014/103941**
**WO-A1-2018/142820** **JP-A- 2003 326 824**
**JP-A- 2005 212 302** **JP-A- 2008 087 246**
**JP-A- 2011 212 914** **JP-A- 2016 060 049**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

Technical Field

The present invention relates to a method for producing printed matter, and more specifically to a method for producing printed matter that can achieve both improvement in laminate adhesion and improvement in image quality.

Background Art

There is a technique in which the ink printed on a base material by ink jet printing is completely cured, and then an adhesive layer and a laminate film are formed over the ink (Patent Literature 1).

Citation List

Patent Literature

Patent Literature 1: JP 2016-60049 A

Summary of Invention

Technical Problem

Patent Literature 1 does not disclose a method that achieves both improvement in laminate adhesion and improvement in image quality.

Thus, an object of the present invention is to provide a method for producing printed matter that can achieve both improvement in laminate adhesion and improvement in image quality.

Other objects of the present invention will be clarified by the following description.

Solution to Problem

The above-mentioned problem is solved by the following inventions.

1. A method for producing printed matter, including:

   a print step of forming a printing layer on a non-absorbent or slightly absorbent base material by ink jet printing using an ink that is active ray-curable;
   a first active ray irradiation step of irradiating the printing layer with an active ray to bring a rate of polymerization of a photopolymerizable compound of the ink that constitutes the printing layer to a range of 5% to 80%;
   a lamination step of laminating a laminate film on the printing layer with an adhesive layer interposed between the laminate film and the printing layer; and
   a second active ray irradiation step of irradiating the printing layer with an active ray from the laminate film side or the non-absorbent or slightly absorbent base material side to further increase the rate of polymerization of a photopolymerizable compound of the ink that constitutes the printing layer.

2. The method for producing printed matter according to 1 above, wherein the ink contains a gelling agent.
3. The method for producing printed matter according to 2 above, wherein

   the ink is radical-curable, and
   in the first active ray irradiation step, the printing layer is irradiated with an active ray to bring a rate of polymerization of a photopolymerizable compound of the ink that constitutes the printing layer to a range of 5% to 70%.

4. The method for producing printed matter according to 2 above, wherein

   the ink is cation-curable, and
   in the first active ray irradiation step, the printing layer is irradiated with an active ray to bring a rate of polymerization of a photopolymerizable compound of the ink that constitutes the printing layer to a range of 5% to 80%.

5. The method for producing printed matter according to 1 above, wherein

the ink is radical-curable, and
in the first active ray irradiation step, the printing layer is irradiated with an active ray to bring a rate of polymerization of a photopolymerizable compound of the ink that constitutes the printing layer to a range of 20% to 70%.

6. The method for producing printed matter according to 1 above, wherein

the ink is cation-curable, and
in the first active ray irradiation step, the printing layer is irradiated with an active ray to bring a rate of polymerization of a photopolymerizable compound of the ink that constitutes the printing layer to a range of 20% to 80%.

## Advantageous Effects of Invention

According to the present invention, a method for producing printed matter that can achieve both improvement in laminate adhesion and improvement in image quality can be provided.

## Brief Description of Drawings

Fig. 1 is a diagram that conceptually explains an example of a method for producing printed matter according to the present invention.

## Description of Embodiments

Hereinafter, modes for carrying out the present invention will be described in detail.

Fig. 1 is a diagram that conceptually explains an example of a method for producing printed matter according to the present invention.

As shown in Fig. 1A, a printing layer 2 is formed on a non-absorbent or slightly absorbent base material 1 by ink jet printing using an ink that is active ray-curable (also referred to as an ink jet ink) (print step).

Then, as shown in Fig. 1B, the printing layer 2 is irradiated with an active ray (an ultraviolet ray in the illustrated example) to bring a rate of polymerization of a photopolymerizable compound of the ink that constitutes the printing layer 2 to a range of 5% to 80% (first active ray irradiation step).

Then, as shown in Fig. 1C, a laminate film 4 is laminated on the printing layer 2 with an adhesive layer 3 interposed between the laminate film 4 and the printing layer 2 (lamination step).

Then, as shown in Fig. ID, the printing layer 2 is irradiated with an active ray (an ultraviolet ray in the illustrated example) from the laminate film 4 side or the non-absorbent or slightly absorbent base material 1 side (from the laminate film 4 side in the illustrated example) to further increase the rate of polymerization of a photopolymerizable compound of the ink that constitutes the printing layer 2 (second active ray irradiation step).

Such a method for producing printed matter can achieve both improvement in laminate adhesion and improvement in image quality. The image durability can be also improved while achieving both of these. The reasons why these effects are exhibited are presumed to be as follows.

It was found that when the ink is completely cured and then lamination is performed as in Patent Literature 1, the laminate film is easily peeled off. When the laminate film is peeled off, the image quality decreases due to deterioration even if high image quality printing is performed. The reason why the laminate film is easily peeled off is presumed to be poor adhesion due to the weak intermolecular interaction at the adhesive interface. In particular, an ink that is active ray-curable rises in dots on a non-absorbent or slightly absorbent base material, thus the area of the adhesive interface (ink surface area) that is inferior in adhesion tends to be larger, and the laminate adhesion tends not to be obtained.

Meanwhile, in the present embodiment, first, in the first active ray irradiation step, the ink is not completely cured, but a part of the photopolymerizable compound is polymerized. When a part of the photopolymerizable compound is polymerized, even if an adhesive layer and a laminate film are laminated over the printing layer in the subsequent lamination step, the dot collapse of the ink is prevented and the image quality is improved.

Compared to the case where the ink is completely cured, the components of the adhesive layer placed between the printing layer and the laminate film in the lamination step are more likely to permeate into the ink. After the lamination step, by further advancing the polymerization of the photopolymerizable compound in the second active ray irradiation step, the ink is cured with the ink being permeated with the components of the adhesive layer, and the anchor effect is exhibited. By this anchor effect, a strong mechanical bond is formed on the adhesive interface, and the laminate adhesion is improved.

Further, by further advancing the polymerization of the photopolymerizable compound in the second active ray irradiation step, the printing layer is prevented from being peeled from the non-absorbent or slightly absorbent base material, and the image durability is also improved.

As described above, both improvement in laminate adhesion and improvement in image quality can be achieved. The image durability can be also improved while achieving both of these.

The state in which a part of the photopolymerizable compound is polymerized is a state in which the ink applied on the non-absorbent or slightly absorbent base material is partially cured. Such a state can be suitably formed by appropriately adjusting the irradiation conditions of the active ray in the first active ray irradiation step to bring the rate of polymerization of the photopolymerizable compound to a range of 5% to 80%.

From the viewpoint of even better exhibition of the effect of the present invention, the ink preferably contains an oil gelling agent. The hardness of the dots is improved by gelation of the ink, thus the dot collapse of the ink is prevented in the lamination step, and the image quality is further improved. When an oil gelling agent is used, the hardness of the dots can be improved even when the rate of polymerization in the first active ray irradiation step is low. Thus, the above-mentioned anchor effect can be remarkably exhibited by a low rate of polymerization while maintaining good image quality, and the laminate adhesion can be further improved.

The ink used in the method for producing printed matter and each step of the method for production will be described in detail below.

[Ink]

As the ink that is active ray-curable, an ink (ink composition) that can be cured by an active ray can be used, and specifically, an ink containing a photopolymerizable compound can be used. Examples of such an ink include an ink that contains a radically polymerizable compound and is radical-curable and an ink that contains a cationically polymerizable compound and is cation-curable.

The "active ray" is a ray capable of imparting energy for generating an initiation species to the ink composition by irradiation with it, and includes $\alpha$-rays, $\gamma$-rays, X-rays, ultraviolet rays, and electron rays. Among them, from the viewpoint of curing sensitivity and availability of an instrument, ultraviolet rays and electron rays are preferable, and ultraviolet rays are more preferable.

The photopolymerizable compound has a function of curing an ink by being polymerized when the photopolymerizable compound is irradiated with the active ray. The photopolymerizable compound can be a monomer, a polymerizable oligomer, a prepolymer, or a mixture thereof. Only one type of photopolymerizable compounds can be contained in the ink, or two or more types of photopolymerizable compounds can be contained in the ink.

The content of the photopolymerizable compound is preferably in the range of 1 to 97% by mass based on the total mass of the ink from the viewpoint of film physical properties such as curability and flexibility, and is more preferably in the range of 30 to 95% by mass.

The radically polymerizable compound is not particularly limited, and examples thereof include an N-vinyl compound (a compound having an N-C=C structure) and an unsaturated carboxylate ester. One type of these can be used alone, or multiple types of these can be used in combination. For example, one or more types of N-vinyl compounds and one or more types of unsaturated carboxylate esters can be used in combination.

Examples of the N-vinyl compound include N-vinylcaprolactam, N-vinylpyrrolidone, and N-vinylformamide. Examples of the N-vinylcaprolactam include N-vinyl-2-caprolactam. Examples of N-vinylpyrrolidone include N-vinyl-2-pyrrolidone.

Examples of the unsaturated carboxylate ester include a (meth)acrylate.

In the present specification, the "(meth)acrylate" means acrylate or methacrylate, "(meth)acryloyl group" means acryloyl group or metaacryloyl group, and "(meth)acrylic" means acrylic or methacrylic.

Examples of the (meth)acrylate include monofunctional acrylates such as isoamyl (meth)acrylate, stearyl (meth)acrylate, lauryl (meth)acrylate, octyl (meth)acrylate, decyl (meth)acrylate, isomilstill (meth)acrylate, isostearyl (meth)acrylate, 2-ethylhexyl-diglycol (meth)acrylate, 2-hydroxybutyl (meth)acrylate, 2-(meta)acryloyloxyethyl hexahydrophthalic acid, butoxyethyl (meth)acrylate, ethoxydiethylene glycol (meth)acrylate, methoxydiethylene glycol (meth)acrylate, methoxypolyethylene glycol (meth)acrylate, methoxypropylene glycol (meth)acrylate, phenoxyethyl (meth)acrylate, tetrahydrofurfuryl (meth)acrylate, isobornyl (meth)acrylate, 2-hydroxyethyl (meth)acrylate, 2-hydroxypropyl (meth)acrylate, 2-hydroxy-3-phenoxypropyl (meth)acrylate, 2-(meth) acryloyloxyethyl succinic acid, 2-(meta) acryloyloxyethyl phthalic acid, 2-(meth)acryloyloxyethyl-2-hydroxyethyl-phthalic acid, and t-butylcyclohexyl (meth)acrylate; bifunctional (meth)acrylates such as triethylene glycol di(meth)acrylate, tetraethylene glycol di(meth)acrylate, polyethylene glycol di(meth)acrylate, tripropylene glycol di(meth)acrylate, polypropylene glycol di(meth)acrylate, 1,4-butanediol di(meth)acrylate, 1,6-hexanediol di(meth)acrylate, 1,9-nonanediol di(meth)acrylate, neopentyl glycol di(meth)acrylate, dimethylol-tricyclodecane di(meth)acrylate, di(meth)acrylate having a bisphenol A structure, hydroxypivalic acid neopentyl glycol di(meth)acrylate, polytetramethylene glycol di(meth)acrylate, polyethylene glycol diacrylate, and tripropylene glycol diacrylate; tri- or higher functional (meth)acrylates such as trimethylolpropane tri(meth)acrylate, pentaerythritol tri(meth)acrylate, pentaerythritol tetra(meth)acrylate, dipentaerythritol hexa(meth)acrylate, ditrimethylolpropane tetra(meth)acrylate, glycerin propoxy tri(meth)acrylate, and pentaerythritol ethoxy tetra(meth)acrylate; oligomers having a

(meth)acryloyl group such as polyester acrylate oligomer; and modified products thereof.

Examples of the modified products include ethylene oxide-modified (EO-modified) acrylate with an ethylene oxide group inserted, propylene oxide-modified (PO-modified) acrylate with a propylene oxide inserted, and caprolactone-modified acrylate.

As the (meth)acrylate, one or more types of (meth)acrylate compounds having a molecular weight in the range of 280 to 1500 and a ClogP value in the range of 4.0 to 7.0 (hereinafter, also simply referred to as "(meth)acrylate compound A") can be contained.

When the ink contains the (meth)acrylate compound A, the viscosity of the ink after landing can be appropriately increased, and the image quality can be further improved. In particular, when the ink contains the (meth)acrylate compound A and a gelling agent, such an effect becomes remarkable.

The (meth)acrylate compound A more preferably has two or more (meth)acrylate groups.

The molecular weight of the (meth)acrylate compound A is in the range of 280 to 1500 as described above, and more preferably in the range of 300 to 800.

The molecular weight of the (meth)acrylate compound A can be measured using the following commercially available software package 1 or 2.

Software package 1: MedChem Software (Release 3.54, August 1991, Medicinal Chemistry Project, Pomona College, Claremont, CA)
Software package 2: Chem Draw Ultra ver.8.0. (April 2003, CambridgeSoft Corporation, USA)

The "logP value" is a coefficient indicating the affinity of an organic compound for water and 1-octanol. 1-Octanol-water partition coefficient P is the partition equilibrium when a trace amount of a compound is dissolved as a solute in a two-liquid phase solvent of 1-octanol and water, is the ratio of the equilibrium concentration of the compound in each solvent, and is shown in their logP for the base 10. That is, the "logP value" is a logarithmic value of the 1-Octanol-water partition coefficient, and is known as an important parameter indicating the hydrophilicity and hydrophobicity of a molecule.

The "ClogP value" is a logP value determined by calculation. The ClogP value can be calculated by the fragment method, the atomic approach method, or the like. More specifically, to calculate the ClogP value, the fragment method described in the literature (C. Hansch and A. Leo, "Substituent Constants for Correlation Analysis in Chemistry and Biology" (John Wiley & Sons, New York, 1969)) or the following commercially available software package 1 or 2 can be used.

Software package 1: MedChem Software (Release 3.54, August 1991, Medicinal Chemistry Project, Pomona College, Claremont, CA)
Software package 2: Chem Draw Ultra ver.8.0. (April 2003, CambridgeSoft Corporation, USA)

The numerical value of the ClogP value described in the specification of the present application is the "ClogP value" calculated using the software package 2.

Though the amount of the (meth)acrylate compound A contained in the ink is not particularly limited, it is preferably in the range of 1 to 40% by mass, and more preferably in the range of 5 to 30% by mass in the total mass of the ink. When the amount of the (meth)acrylate compound A is 1% by mass or more, the ink does not become too hydrophilic, the gelling agent is sufficiently dissolved in the ink, and thus the ink easily undergoes a sol-gel phase transition. Meanwhile, when the amount of the (meth)acrylate compound A is 40% by mass or less, the photopolymerization initiator can be sufficiently dissolved in the ink.

More preferable examples of the (meth)acrylate compound A include (1) a tri- or higher functional methacrylate or acrylate compound having 3 to 14 structures represented by $(-C(CH_3)H-CH_2-O-)$ in the molecule, and (2) a bi- or higher functional methacrylate or acrylate compound having a cyclic structure in the molecule. These (meth)acrylate compounds have high photocurability and low shrinkage when they are cured. Further, the reproducibility of the sol-gel phase transition is high.

The tri- or higher functional methacrylate or acrylate compound having 3 to 14 structures represented by $(-C(CH_3)H-CH_2-O-)$ in the molecule is, for example, a product obtained by propylene oxide-modifying the hydroxy group of a compound having three or more hydroxy groups, and esterifying the obtained modified product with (meth) acrylic acid. Specific examples of this compound include 3PO-modified trimethylolpropane triacrylate (molecular weight: 471, ClogP: 4.90, "Photomer 4072" manufactured by Cognis) and 3PO-modified trimethylolpropane triacrylate (molecular weight: 471, ClogP: 4.90, "Miramer M360" manufactured by Miwon Specialty Chemical Co.,Ltd.).

The bi- or higher functional methacrylate or acrylate compound having a cyclic structure in the molecule is, for example, a product obtained by esterifying the hydroxy group of a compound having two or more hydroxy groups and tricycloalkane with (meth)acrylic acid. Specific examples of this compound include tricyclodecanedimethanol diacrylate

(molecular weight: 304, ClogP: 4.69, "NK ester A-DCP" manufactured by SHIN-NAKAMURA CHEMICAL CO, LTD.) and tricyclodecanedimethanol dimethacrylate (molecular weight: 332, ClogP: 5.12, "NK ester DCP" manufactured by SHIN-NAKAMURA CHEMICAL CO, LTD.).

Other specific examples of the (meth)acrylate compound A include 1,10-decanediol dimethacrylate (molecular weight: 310, ClogP: 5.75, "NK ester DOD-N" manufactured by SHIN-NAKAMURA CHEMICAL CO, LTD.).

As the (meth)acrylate, one or more types of (meth)acrylates other than the above-mentioned (meth)acrylate compound A can be contained. One or more types of (meth)acrylate compounds A and one or more types of (meth)acrylates other than (meth)acrylate compounds A can be used in combination.

Examples of the (meth)acrylates other than (meth)acrylate compounds A include a (meth)acrylate monomer or oligomer having a ClogP value of less than 4.0, a (meth)acrylate monomer or oligomer having a ClogP value of more than 7.0, and other polymerizable oligomers.

Examples of these (meth)acrylate monomers or oligomers include 4EO-modified hexanediol diacrylate ("CD561" manufactured by Sartomer, molecular weight 358);

3EO-modified trimethylolpropane triacrylate ("SR454" manufactured by Sartomer, molecular weight 429); 4EO-modified pentaerythritol tetraacrylate ("SR494" manufactured by Sartomer, molecular weight 528); 6EO-modified trimethylolpropane triacrylate ("SR499" manufactured by Sartomer, molecular weight 560); caprolactone acrylate ("SR495B" manufactured by Sartomer, molecular weight 344); polyethylene glycol diacrylate ("NK ester A-400" manufactured by SHIN-NAKAMURA CHEMICAL CO, LTD., Ltd., molecular weight 508), ("NK ester A-600" manufactured by SHIN-NAKAMURA CHEMICAL CO, LTD., molecular weight 708); polyethylene glycol dimethacrylate ("NK ester 9G" manufactured by SHIN-NAKAMURA CHEMICAL CO, LTD., molecular weight 536), ("NK ester 14G" manufactured by SHIN-NAKAMURA CHEMICAL CO, LTD.); tetraethylene glycol diacrylate ("V # 335HP" manufactured by OSAKA ORGANIC CHEMICAL INDUSTRY LTD., molecular weight 302); stearyl acrylate ("STA" manufactured by OSAKA ORGANIC CHEMICAL INDUSTRY LTD.); phenolic EO-modified acrylate ("M144" manufactured by Miwon Specialty Chemical Co.,Ltd.); and nonylphenol EO-modified acrylate ("M166" manufactured by Miwon Specialty Chemical Co.,Ltd.).

As the (meth)acrylate, for example, an epoxy acrylate, a urethane acrylate, a polyester acrylate, a linear acrylic oligomer, and the like can be used. Examples of the urethane acrylate include an aliphatic urethane acrylate and an aromatic urethane acrylate.

Examples of the cationically polymerizable compound include an epoxy compound, a vinyl ether compound, an oxetane compound, and the like. One type of these can be used alone, or multiple types of these can be used in combination.

Examples of the epoxy compound include an aromatic epoxide, an alicyclic epoxide, and an aliphatic epoxide.

The aromatic epoxide can be a di or polyglycidyl ether obtained by reacting a polyhydric phenol or an alkylene oxide adduct thereof with epichlorohydrin. Examples of the polyhydric phenol or the alkylene oxide adduct thereof to be reacted include bisphenol A and the alkylene oxide adduct thereof. The alkylene oxide in the alkylene oxide adduct can be ethylene oxide, propylene oxide, and the like.

The alicyclic epoxide can be a cycloalkane oxide-containing compound obtained by epoxidizing a cycloalkane-containing compound with an oxidizing agent such as hydrogen peroxide and peracid. The cycloalkane in the cycloalkane oxide-containing compound can be cyclohexene or cyclopentene.

The aliphatic epoxide can be a di or polyglycidyl ether obtained by reacting an aliphatic polyhydric alcohol or an alkylene oxide adduct thereof with epichlorohydrin. Examples of the aliphatic polyhydric alcohol include alkylene glycols such as ethylene glycol, propylene glycol, and 1,6-hexanediol. The alkylene oxide in the alkylene oxide adduct can be ethylene oxide, propylene oxide, and the like.

Examples of the vinyl ether compound include monovinyl ether compounds such as ethyl vinyl ether, n-butyl vinyl ether, isobutyl vinyl ether, octadecyl vinyl ether, cyclohexyl vinyl ether, hydroxybutyl vinyl ether, 2-ethylhexyl vinyl ether, cyclohexanedimethanol monovinyl ether, n-propyl vinyl ether, isopropyl vinyl ether, isopropenyl ether-o-propylene carbonate, dodecyl vinyl ether, diethylene glycol monovinyl ether, and octadecyl vinyl ether; and di or trivinyl ether compounds such as ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexanedimethanol divinyl ether, and trimethylolpropane trivinyl ether.

Examples of the oxetane compound include di(1-ethyl-3-oxetanyl)methyl ether, 3-ethyl-3-(2-ethylhexyloxymethyl)oxetane, 3-ethyl-3-hydroxymethyloxetane, 1,4-bis[(3-ethyl-3-oxetanyl)methoxymethyl]benzene, and 3-ethyl-3-(phenoxymethyl)oxetane.

The oxetane compound can be a compound having one or more oxetane rings in the molecule, and examples thereof include oxetane compounds described in JP 2001-220526 A, JP 2001-310937 A, and JP 2005-255821 A. Among them, the compounds represented by General Formulas (1), (2), (7), (8), and (9) below described in JP 2005-255821 A are preferable.

[Chemical Formula 1]

General Formula (1)

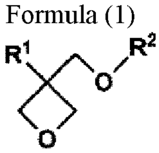

General Formula (2)

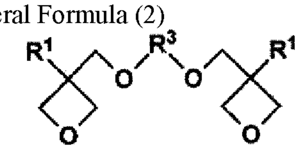

General Formula (7)

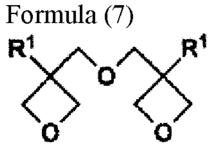

General Formula (8)

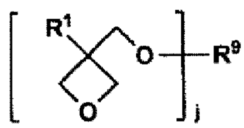

General Formula (9)

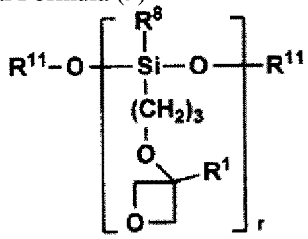

In General Formulas (1), (2), (7), (8), and (9) above, $R^1$ is, for example, a hydrogen atom, an alkyl group having 1 to 6 carbon atoms, a fluoroalkyl group having 1 to 6 carbon atoms, an allyl group, an aryl group, a frill group, or a thienyl group. $R^2$ is, for example, an alkyl group having 1 to 6 carbon atoms, an alkenyl group having 2 to 6 carbon atoms, a phenyl group, a benzyl group, a group having an aromatic ring, an alkylcarbonyl group having 2 to 6 carbon atoms, an alkoxycarbonyl group having 2 to 6 carbon atoms, an N-alkylcarbamoyl group having 2 to 6 carbon atoms, or the like. $R^3$ is, for example, a linear or branched alkylene group, a linear or branched poly(alkyleneoxy) group, a linear or branched unsaturated hydrocarbon group, a carbonyl group or an alkylene group containing a carbonyl group, an alkylene group containing a carboxyl group, an alkylene group containing a carbamoyl group, or the like. $R^8$ is, for example, an alkyl group having 1 to 4 carbon atoms or an aryl group. $R^9$ is, for example, a branched alkylene group having 1 to 12 carbon atoms, a branched poly(alkyleneoxy) group, a branched polysiloxy group, or the like. $R^{11}$ is, for example, an alkyl group having 1 to 4 carbon atoms or a trialkylsilyl group. j is, for example, 3 or 4, and r is, for example, 1 to 4.

The photopolymerizable compound contained in the ink is preferably capable of forming a chemical bond with the components of the adhesive layer provided on the printing layer in the lamination step. Such a chemical bond and the above-mentioned anchor effect can act synergistically to further improve the laminate adhesion. For example, a cationically polymerizable compound, in particular, an epoxy compound, an oxetane compound, or the like is capable of suitably forming a chemical bond with the components of the adhesive layer.

The ink can contain a photopolymerization initiator. As the photopolymerization initiator, when the photopolymerizable compound is a compound having a radically polymerizable functional group (radically polymerizable compound), a photo-radical initiator can be used, and when the photopolymerizable compound is a compound having a cationically polymerizable functional group (cationically polymerizable compound), a photo-acid generator can be used.

One type of photopolymerization initiators can be used alone, or multiple types of photopolymerization initiators can be used in combination. As the photopolymerization initiator, one or more types of photo-radical initiators and one or more types of photo-acid generators can be used in combination.

Examples of the photo-radical initiator include a cleavage type radical initiator and a hydrogen abstraction type radical initiator.

Examples of the cleavage type radical initiator include an acetophenone initiator, a benzoin initiator, an acylphosphine oxide initiator, and a benzyl and a methylphenyl glyoxy ester.

Examples of the acetophenone initiator include diethoxyacetophenone, 2-hydroxy-2-methyl-1-phenylpropan-1-one, benzyl dimethyl ketal, 1-(4-isopropylphenyl)-2-hydroxy-2-methylpropan-1-one, 4-(2-hydroxyethoxy)phenyl-(2-hydroxy-2-propyl)ketone, 1-hydroxycyclohexyl-phenylketone, 2-methyl-2-morpholino(4-thiomethylphenyl)propan-1-one, and 2-benzyl-2-dimethylamino-1-(4-morpholinophenyl)-butanone.

Examples of the benzoin initiator include benzoin, benzoin methyl ether, and benzoin isopropyl ether.

Examples of the acylphosphine oxide initiator include 2,4,6-trimethylbenzoindiphenylphosphine oxide.

Examples of the hydrogen abstraction type radical initiator include a benzophenone initiator, a thioxanthone initiator, an aminobenzophenone initiator, 10-butyl-2-chloroacrydone, 2-ethylanthraquinone, 9,10-phenanthrenequinone, and camphorquinone.

Examples of the benzophenone initiator include benzophenone, o-methyl-4-phenylbenzophenone benzoyl benzoate, 4,4'-dichlorobenzophenone, hydroxybenzophenone, 4-benzoyl-4'-methyl-diphenylsulfide, acrylated benzophenone, 3,3',4,4'-tetra(t-butylperoxycarbonyl)benzophenone, and 3,3'-dimethyl-4-methoxybenzophenone.

Examples of the thioxanthone initiator include 2-isopropylthioxanthone, 2,4-dimethylthioxanthone, 2,4-diethylthioxanthone, and 2,4-dichlorothioxanthone.

Examples of the aminobenzophenone initiator include Michler's ketone and 4,4'-diethylaminobenzophenone.

Examples of the photo-acid generator include triallyl sulfonium salts such as triallyl sulfonium hexafluorophosphate and triaryl sulfonium hexafluoroantimonate; iodonium salts such as diaryliodonium hexafluorophosphate, diphenyliodonium hexafluoroantimonate, bis(dodecylphenyl)iodonium tetrakis(pentafluorophenyl)borate, and iodonium[4-(4-methylphenyl-2-methylpropyl)phenyl]hexafluorophosphate; phosphonium salts such as tetrafluorophosphonium hexafluorophosphate; and pyridium salts. As the photo-acid generator, for example, a commercially available product such as "CPI-100P" (propylene carbonate of triallyl sulfonium salt) manufactured by San-Apro Ltd. can be used.

Examples of the photo-acid generator also include the compound described in Organic Electronics Materials Study Group, "Organic Materials for Imaging", Bun-Shin Co.,Ltd. (1993), pp. 187-192.

The content of the photopolymerization initiator can be in the range where the ink can be sufficiently cured, and can be, for example, in the range of 0.01 to 10% by mass based on the total mass of the ink.

The ink preferably contains a gelling agent. Examples of the gelling agent include a wax gel. Only one type of the gelling agent can be contained in the ink jet ink of the present invention, or two or more types of the gelling agent can be contained in the ink jet ink of the present invention.

For the wax gel, the gelling agent itself becomes a plate-like crystal, which has a card house structure and forms a gel structure.

From the viewpoint of improvement in image quality and improvement in laminate adhesion, the content of the gelling agent is preferably in the range of 0.5 to 10.0% by mass, and more preferably in the range of 1.0 to 5.0% by mass based on the total mass of the ink.

From the following viewpoints, the gelling agent preferably crystallizes in the ink at a temperature equal to or lower than the gelation temperature of the ink. The gelation temperature is a temperature at which the gelling agent undergoes a phase transition from sol to gel and the viscosity of an ink suddenly changes when the ink solated or liquefied by heating is cooled. Specifically, the temperature at which the viscosity rises sharply when a solated or liquefied ink is cooled while measuring the viscosity with a viscoelasticity measuring instrument (for example, "MCR300" manufactured by Physica) can be taken as the gelation temperature of the ink.

When the gelling agent crystallizes in the ink, a structure may be formed in which ink media such as a solvent and a photopolymerizable compound are contained in the three-dimensional space formed by the gelling agent crystallized in a plate shape (such a structure is hereinafter referred to as "card house structure").

When a card house structure is formed, the liquid ink media are held in the space, thus the ink droplets are less likely to get wet and spread, and the pinning property of the ink is further increased. When the pinning property of the ink is increased, the ink droplets that have landed on the recording medium are less likely to coalesce with each other, and a higher-definition image can be formed.

To form a card house structure, it is preferable that the ink media such as a solvent and a photopolymerizable compound in the ink and the gelling agent be compatible with each other.

Examples of the gelling agent suitable for forming a curd house structure by crystallization include a fatty acid ketone (ketone wax), a fatty acid ester (ester wax), a petroleum wax, a fatty acid amide, a higher fatty acid, and a higher alcohol.

Examples of the ketone wax include dilignoceryl ketone, dibehenyl ketone, distearyl ketone, dieicosyl ketone, dipalmityl ketone, dilauryl ketone, dimyristyl ketone, myristyl palmity ketone, and palmityl stearyl ketone.

Examples of the ester wax include behenyl behenate, icosyl icosane, stearyl stearate, palmitic stearate, cetyl palmitate, myristyl myristate, cetyl myristate, myricyl cerotic acid, stearyl stearate, oleyl palmitate, glycerin fatty acid ester, sorbitan fatty acid ester, propropylene glycol fatty acid ester, ethylene glycol fatty acid ester, and polyoxyethylene fatty acid ester. Examples of the commercially available product of the ester wax include "EMALEX" series manufactured by NIHON EMULSION Co., Ltd. ("EMALEX" is a registered trademark of the company) and "RIKEMAL" series and "POEM" series manufactured by RIKEN VITAMIN CO., LTD. (both of "RIKEMAL" and "POEM" are registered trademarks of the company).

Examples of the petroleum wax include paraffin wax, microcrystalline wax, and petrolactam.

Examples of the higher fatty acid include behenic acid, arachidic acid, stearic acid, palmitic acid, myristic acid, lauric acid, oleic acid, and erucic acid.

Examples of the higher alcohol include stearyl alcohol and behenyl alcohol.

Examples of the hydroxystearic acid include 12-hydroxystearic acid.

Examples of the fatty acid amide include lauric acid amide, stearic acid amide, bechenic acid amide, oleic acid amide, erucic acid amide, ricinolic acid amide, and 12-hydroxystearic acid amide. Examples of the commercially available product of the fatty acid amide include "Diamid Y" and "Nikka Amide" series manufactured by Nihon Kasei CO.,LTD. ("Diamid" and "Nikka Amide" are registered trademarks of the company), "ITOWAX" series manufactured by ITOH OIL

CHEMICALS CO.,LTD., and "FATTYAMID" series manufactured by Kao Corporation.

Among these gelling agents, from the viewpoint of pinning effect, the ketone wax, the ester wax, the higher fatty acid, the higher alcohol, and the fatty acid amide are preferable, and the ketone waxes represented by General Formula (G1) below and the ester waxes represented by General Formula (G2) below are further preferable.

Only one type of the ketone wax represented by General Formula (G1) below and the ester wax represented by General Formula (G2) below can be contained in the ink or two or more types of the ketone wax represented by General Formula (G1) below and the ester wax represented by General Formula (G2) below can be contained in the ink. Only one of the ketone wax represented by General Formula (G1) below and the ester wax represented by General Formula (G2) below can be contained in the ink, or both of the ketone wax represented by General Formula (G1) below and the ester wax represented by General Formula (G2) below can be contained in the ink.

General Formula (G1): $R_{11}$-CO-$R_{12}$

General Formula (G2): $R_{13}$-COO-$R_{14}$

wherein $R_{11}$ to $R_{14}$ each independently represent a linear hydrocarbon group having 9 to 25 carbon atoms.

Because the ketone wax represented by General Formula (G1) above or the ester wax represented by General Formula (G2) above have 9 or more carbon atoms in the linear hydrocarbon group, the crystallinity of the gelling agent is more increased, and a more sufficient space is created in the above-mentioned card house structure. Thus, the ink media such as a solvent and a photopolymerizable compound are easily contained in the space, and the pinning property of the ink is more increased. Because the linear hydrocarbon group has 25 or less carbon atoms, the melting point of the gelling agent does not rise excessively, and thus the ink is not required to be excessively heated when the ink is ejected. From these viewpoints, $R_{11}$ and $R_{12}$, or $R_{13}$ and $R_{14}$ are particularly preferably linear hydrocarbon groups having 13 or more and less than 23 carbon atoms.

From the viewpoint of raising the gelation temperature of the ink to gel the ink more rapidly after landing, either $R_{11}$ or $R_{12}$, or either $R_{13}$ or $R_{14}$ is preferably a saturated hydrocarbon group having 11 or more and less than 23 carbon atoms. From these viewpoints, both $R_{11}$ and $R_{12}$, or both $R_{13}$ and $R_{14}$ are more preferably saturated hydrocarbon groups having 11 or more and less than 23 carbon atoms.

Examples of the ketone wax represented by General Formula (G1) above include dilignoceryl ketone (carbon number: 23 to 24), dibehenyl ketone (carbon number: 21 to 22), distearyl ketone (carbon number: 17 to 18), dieicosyl ketone (carbon number: 19 to 20), dipalmityl ketone (carbon number: 15 to 16), dimyristyl ketone (carbon number: 13 to 14), dilauryl ketone (carbon number: 11 to 12), lauryl myristyl ketone (carbon number: 11 to 14), lauryl palmityl ketone (carbon number: 11 to 16), myristyl palmityl ketone (carbon number: 13 to 16), myristyl stearyl ketone (carbon number: 13 to 18), myristylbehenyl ketone (carbon number: 13 to 22), palmytyl stearyl ketone (carbon number: 15 to 18), balmityl behenyl ketone (carbon number: 15 to 22), and stearyl behenyl ketone (carbon number: 17 to 22). The carbon number in parentheses represents the carbon number of each of the two hydrocarbon groups separated by the carbonyl group. Examples of the commercially available product of the ketone wax represented by General Formula (G1) include "18-Pentatriacontanon" manufactured by Alfa Aeser, "Hentriacontan-16-on" manufactured by Alfa Aeser, and "Kaohwax T-1" manufactured by Kao Corporation.

Examples of the fatty acid or ester wax represented by General Formula (G2) include behenyl behenate (carbon number: 21 to 22), icosyl icosanate (carbon number: 19 to 20), stearyl stearate (carbon number: 17 to 18), palmityl stearate (carbon number: 17 to 16), lauryl stearate (carbon number: 17 to 12), cetyl palmitate (carbon number: 15 to 16), stearyl palmitate (carbon number: 15 to 18), myristyl myristate (carbon number: 13 to 14), cetyl myristate (carbon number: 13 to 16), octyldodecyl myristate (carbon number: 13 to 20), stearyl oleate (carbon number: 17 to 18), stearyl erucate (carbon number: 21 to 18), stearyl linoleate (carbon number: 17 to 18), behenyl oleate (carbon number: 18 to 22), and arakidil linoleate (carbon number: 17 to 20). The carbon number in parentheses represents the carbon number of each of the two hydrocarbon groups separated by the ester group. Examples of the commercially available product of the ester wax represented by General Formula (G2) include "UNISTAR M-2222SL" and "SPALM ASETTI" manufactured by NOF CORPORATION ("UNISTAR" is a registered trademark of the company), "Exepearl SS" and "Exepearl MY-M" manufactured by Kao Corporation ("Exepearl" is a registered trademark of the company), "EMALEX CC-18" and "EMALEX CC-10" manufactured by NIHON EMULSION Co., Ltd. ("EMALEX" is a registered trademark of the same company), and "Amrepus PC" manufactured by KOKYU ALCOHOL KOGYO CO., LTD. ("Amrepus" is a registered trademark of the company).

When the commercially available product is a mixture of two or more types, it can be subjected to separation and purification as necessary and contained in the ink.

The ink can contain a coloring material. Though the coloring material can be a dye or a pigment, a pigment is preferable because it has good dispersibility in the components of the ink and is excellent in weather resistance. The pigment is not particularly limited, and examples thereof include an organic pigment and an inorganic pigment having

the following numbers listed in Colour Index International.

Examples of red or magenta pigments include pigments selected from Pigment Red 3, 5, 19, 22, 31, 38, 43, 48 : 1, 48 : 2, 48 : 3, 48 : 4, 48 : 5, 49 : 1, 53 : 1, 57 : 1, 57 : 2, 58 : 4, 63 : 1, 81, 81 : 1, 81 : 2, 81 : 3, 81 : 4, 88, 104, 108, 112, 122, 123, 144, 146, 149, 166, 168, 169, 170, 177, 178, 179, 184, 185, 208, 216, 226, 257, Pigment Violet 3, 19, 23, 29, 30, 37, 50, 88, Pigment Orange 13, 16, 20, and 36, and mixtures thereof.

Examples of blue or cyan pigments include pigments selected from Pigment Blue 1, 15, 15 : 1, 15 : 2, 15 : 3, 15 : 4, 15 : 6, 16, 17-1, 22, 27, 28, 29, 36, and 60, and mixtures thereof.

Examples of green pigments include pigments selected from Pigment Green 7, 26, 36, and 50, and mixtures thereof.

Examples of yellow pigments include pigments selected from Pigment Yellow 1, 3, 12, 13, 14, 17, 34, 35, 37, 55, 74, 81, 83, 93, 94, 95, 97, 108, 109, 110, 137, 138, 139, 153, 154, 155, 157, 166, 167, 168, 180, 185, and 193, and mixtures thereof.

Examples of black pigments include pigments selected from Pigment Black 7, 28, and 26, and mixtures thereof.

The pigment can be dispersed with, for example, a ball mill, a sand mill, an attritor, a roll mill, an agitator, a Henschel mixer, a colloid mill, an ultrasonic homogenizer, a pearl mill, a wet jet mill, a paint shaker, or the like.

From the viewpoint of further increasing the ejection property from the inkjet head, the average dispersed particle size of the pigment particles is preferably in the range of 50 to 150 nm, and the maximum particle size is preferably in the range of 300 to 1000 nm. A further preferable average dispersed particle size is in the range of 80 to 130 nm.

The average dispersed particle size of the pigment particles means a value determined by dynamic light scattering using Zetasizer nano ZSP manufactured by Malvern Panalytical Ltd. An ink containing a coloring material has a high concentration, and this measuring instrument does not transmit light. Thus, the ink is diluted 200 times before measurement. The measurement temperature is room temperature (25°C).

The dispersion of the pigment is adjusted by the selection of the pigment, the dispersant, and the dispersion medium, the dispersion conditions, the filtration conditions, and the like.

The ink can contain a dispersant to increase the dispersibility of the pigment.

Examples of the dispersant include a hydroxy group-containing carboxylate ester, a salt of a long-chain polyaminoamide and a high molecular weight acid ester, a salt of a high molecular weight polycarboxylic acid, a salt of a long chain polyaminoamide and a polar acid ester, a high molecular weight unsaturated acid ester, a high molecular weight copolymer, a modified polyurethane, a modified polyacrylate, a polyether ester anionic activator, a naphthalene sulfonic acid formalin condensate salt, an aromatic sulfonic acid formalin condensate salt, a polyoxyethylene alkyl phosphoric acid ester, a polyoxyethylene nonylphenyl ether, and stearylamine acetate. Examples of the commercially available product of the dispersant include "Solsperse" series manufactured by Avecia and "PB" series manufactured by Ajinomoto Fine-Techno Co., Inc.

The ink can further contain a dispersing agent as necessary. The dispersing agent can be selected according to the pigment.

The total amount of the dispersant and the dispersing agent is preferably in the range of 1 to 50% by mass relative to the amount of the pigment.

The ink can further contain a dispersion medium for dispersing the pigment as necessary. Though the ink can contain a solvent as the dispersion medium, the above-mentioned photopolymerizable compound is preferably used as the dispersion medium to suppress the residue of the solvent in the formed image.

Examples of the dye include an oil-soluble dye. Examples of the oil-soluble dye include a magenta dye, a cyan dye, a yellow dye, and a black dye, and one type of these can be used alone or two or more types of these can be used in combination.

The content of the coloring material is preferably in the range of 0.1 to 20% by mass, and more preferably in the range of 0.4 to 10% by mass based on the total amount of the ink.

The ink can contain other components other than the components described above as long as the effects of the present invention can be obtained. Examples of other components include a polymerization inhibitor and a surfactant. Only one type of these components can be contained in the ink, or multiple types of these components can be contained in the ink.

Examples of the polymerization inhibitor include (alkyl)phenol, hydroquinone, catechol, resorcin, p-methoxyphenol, t-butylcatechol, t-butylhydroquinone, pyrogallol, 1,1-picrylhydrazil, phenothiazine, p-benzoquinone, nitrosobenzene, 2,5-di-t-butyl-p-benzoquinone, dithiobenzoyl disulfide, picric acid, cuperon, aluminum N-nitrosophenylhydroxyamine, tri-p-nitrophenylmethyl, N-(3-oxyanilino-1,3-dimethylbutylidene) aniline oxide, dibutyl cresol, cyclohexanone oxime cresol, guaiacol, o-isopropylphenol, butyraldoxime, methylethylketoxime, and cyclohexanone oxime.

The amount of the polymerization inhibitor can be arbitrarily set as long as the effect of the present invention can be obtained, and can be, for example, 0.001% by mass or more and less than 1.0% by mass based on the total mass of the ink.

Examples of the surfactant include anionic surfactants such as dialkyl sulfosuccinates, alkylnaphthalene sulfonates, and fatty acid salts, nonionic surfactants such as polyoxyethylene alkyl ethers, polyoxyethylene alkyl allyl ethers, acetylene glycols, and polyoxyethylene/polyoxypropylene block copolymers, cationic surfactants such as alkylamine salts and quaternary ammonium salts, and silicone or fluorine surfactants.

Examples of the silicone surfactants include polyether-modified polysiloxane compounds. Examples of the fluorine surfactants include those having a structure in which a part or all of hydrogen atoms bonded to the carbon atom of the hydrophobic group of a normal surfactant is substituted with fluorine atoms.

The amount of the surfactant can be arbitrarily set as long as the effect of the present invention can be obtained. The amount of the surfactant can be, for example, 0.001% by mass or more and less than 1.0% by mass based on the total mass of the ink.

From the viewpoint of further increasing the ejection property of the ink, the viscosity of the ink at 80°C is preferably in the range of 3 to 20 mPa · s, and more preferably in the range of 7 to 12 mPa · s. From the viewpoint of sufficiently gelling the ink when the ink lands and the temperature decreases to room temperature, the viscosity of the ink in the present invention at 25°C is preferably 1000 mPa · s or more.

The gelation temperature of the ink is preferably in the range of 30 to 70°C. When the gelation temperature of the ink is 30°C or more, and further is 40°C or more, the ink gels quickly after landing on the recording medium, and thus the pinning property becomes higher. When the gelation temperature of the ink is 70°C or less, and further is 60°C or less, the ink is less likely to gel when the ink is ejected from the inkjet head in which the temperature of the ink is usually about 80°C, and thus the ink can be ejected more stably.

The viscosity at 80°C, the viscosity at 25°C, and the gelation temperature of the ink can be determined by measuring the temperature change of the dynamic viscoelasticity of the ink with a rheometer. Specifically, the ink is heated to 100°C, and the ink is cooled to 20°C under a condition of a shear rate of 11.7 (1/s) and a temperature drop rate of 0. 1°C/s while measuring the viscosity with a stress-controlled rheometer Physica MCR301 (cone plate diameter: 75 mm, cone angle: 1.0°) manufactured by Anton Paar to obtain a temperature change curve of viscosity. The viscosity at 80°C and the viscosity at 25°C can be determined by reading the viscosity at 80°C and the viscosity at 25°C on the temperature change curve of the viscosity, respectively. The gelation temperature can be determined as the temperature at which the viscosity becomes 200 mPa · s on the temperature change curve of the viscosity.

[Print step]

In the print step, a printing layer is formed on a non-absorbent or slightly absorbent base material by ink jet printing using the ink described above.

The ink jet printing is not particularly limited as long as a printing layer can be formed on a non-absorbent or slightly absorbent base material using an ink. As an inkjet recording device of an active ray-curable type inkjet printing system, there are a device of line recording method (single path recording method) and a device of serial recording method, and the device can be appropriately selected according to the required image resolution and recording speed.

The method of ink ejection from the inkjet head can be a drop on demand method or a continuous method. The inkjet head of drop on demand method can be those of electro-mechanical conversion (piezo) methods such as single cavity type, double cavity type, bender type, piston type, shear mode type, and shear wall type, or those of electric-heat conversion methods such as thermal inkjet type and bubble jet (registered trademark) (registered trademark of Canon Inc.) type.

The ejection stability can be increased by ejecting the ink droplets from the inkjet head in a heated state. The temperature of the ink during ejection is preferably in the range of 40 to 100°C, and more preferably in the range of 40 to 90°C to further increase the ejection stability. Ejection is preferably performed in an ink temperature in which the viscosity of the ink is in the range of 7 to 15 mPa · s, and more preferably in the range of 8 to 13 mPa . s.

For a sol-gel phase transition type ink, to increase the ejection property of the ink from the inkjet head, the temperature of the ink when the ink is loaded in the inkjet head is preferably set to (gelation temperature + 10)°C to (gelation temperature + 30)°C of the ink. When the temperature of the ink in the inkjet head is less than (gelation temperature +10)°C, the ink gels in the inkjet head or on the nozzle surface, and the ejection property of the ink tends to decrease. Meanwhile, when the temperature of the ink in the inkjet head exceeds (gelation temperature + 30)°C, the temperature of the ink becomes too high, and the ink components may deteriorate.

The method of heating the ink is not particularly limited. For example, at least one of an ink supply system such as an ink tank, a supply pipe, and an anterior chamber ink tank immediately in front of the head that constitute a head carriage, piping with filter, a piezo head, and the like can be heated by a panel heater, a ribbon heater, warm water, or the like.

The amount of ink droplets during ejection is preferably in the range of 2 to 20 pL from the viewpoint of recording speed and image quality.

The non-absorbent or slightly absorbent base material only needs to have a non-absorbent surface at least on the region where the printing layer is formed. The non-absorbent surface preferably have a water absorption of 0.3 g/m$^2$

or less from the start of contact to 30 $msec^{1/2}$ measured by Bristow method.

The non-absorbent base material is not particularly limited, and examples thereof include a base material (resin base material) composed of resins such as polyester, polyvinyl chloride, polyethylene, polyurethane, polypropylene, acrylic resin, polycarbonate, polystyrene, acrylonitrile-butadiene-styrene copolymer, polyethylene terephthalate, and polybutadiene terephthalate, and a base material composed of metals, glasses, or the like. As the non-absorbent base material, a non-absorbent base material obtained by treating an absorbent base material such as paper can also be used. Examples of the paper include titanium paper. Though the treatment to change an absorbent base material to a non-absorbent base material is not particularly limited, examples thereof include a treatment of coating the surface of an absorbent base material with a non-absorbent material and a treatment of impregnating an absorbent base material with a non-absorbent material. The non-absorbent material is not particularly limited, and examples thereof include resins.

The slightly absorbent base material is not particularly limited, and examples thereof include an enamel paper for printing. The enamel paper for printing is an enamel paper that is often used for printing, and is generally produced by applying a pigment such as white clay to the surface of a fine quality paper or medium quality paper as a base paper, and then calendering the paper to increase smoothness. By such a treatment, whiteness and smoothness, receptivity of a printing ink, halftone dot reproducibility, printing gloss, printing opacity, and the like are improved. Papers are classified to an art paper, a coated paper, a lightweight coated paper, and the like according to the amount of coating, and classified to a gloss type, a dull type, matte type, and the like according to the gloss of the paper. The art paper is an enamel paper having an amount of coating of about 20 $g/m^2$ on one side, and is generally produced by applying a pigment to the surface of a paper, and then calendering the paper. There are types of the art paper such as special art, average art, a matte art, single art (single-sided coating), and double-sided art (double-sided coating), and specifically, there are OK Kanto N, Satin Kanto N, SA Kanto, Ultra Satin Kanto N, OK Ultra Aqua Satin, OK Kanto One Side, N Art Post, NK Special Double Sided Art, Thunderbird Super Art N, Thunderbird Super Art MN, Thunderbird Art N, Thunderbird Dull Art N, High McKinley Art, High McKinley Matte, High McKinley Pure Dull Art, High McKinley Super Dull, High McKinley Matte Elegance, High McKinley Deep Mat, and the like. The coated paper is an enamel paper having an amount of coating of about 10 $g/m^2$ on one side, and is generally produced by processing a paper with a coating device provided in the middle of a paper machine. The amount of coating is less than that of an art paper, and the coated paper has slightly less smoothness. However, the coated paper has advantages of low cost and light weight. There are also types of an enamel paper having a still less amount of coating such as a lightweight coated paper and a lightly coated paper. Specific examples of these coated papers include POD Gloss Coat, OK Top Coat +, OK Top Coat S, Aurora Coat, Mu Coat, Mu White, Thunderbird Coat N, Utrilo Coat, Pearl Coat, White Pearl Coat, POD Matte Coat, New Age, New Age W, OK Top Coat Matte N, OK Royal Coat, OK Top Coat Dull, Z Coat, Silver Diamond, Eulite, Neptune, Mu Matte, White Mu Matte, Thunderbird Matte Coat N, Utrilogros Matte, New V-Matte, and White New V-Matte.

[First active ray irradiation step]

In the first active ray irradiation step, the printing layer is irradiated with an active ray to bring a rate of polymerization of a photopolymerizable compound of the ink that constitutes the printing layer to a range of 5% to 80%.

That is, in the first active ray irradiation step, the ink is not completely cured, and the polymerization is partially performed to leave room for further polymerization in the subsequent second active ray irradiation step. Thereby, the laminate adhesion can be improved compared to the case where the ink is completely cured.

In particular, when the rate of polymerization of the photopolymerizable compound in the first active ray irradiation step is 5% or more, the effect of improving the image quality is satisfactorily exhibited, and when the rate of polymerization is 80% or less, the effect of improving the laminate adhesion is satisfactorily exhibited.

In the first active ray irradiation step, the irradiation conditions of the active ray can be appropriately adjusted in irradiation with the active ray so that the rate of polymerization of the photopolymerizable compound will be in the range of 5% to 80%. Examples of the irradiation conditions include the amount of light of the active ray and the irradiation time, and by adjusting at least one of these, a desired rate of polymerization can be obtained.

The active ray can be selected from, for example, electron rays, ultraviolet rays, $\alpha$ rays, y rays, X-rays, and the like, and is preferably ultraviolet rays.

In irradiation with ultraviolet rays, for example, a metal halide lamp, a high-pressure mercury lamp, an LED, or the like can be used as the light source. Irradiation with ultraviolet rays can be performed under conditions of a wavelength of 395 nm using, for example, a water-cooled LED manufactured by Phoseon Technology. By using an LED as a light source, melting of the ink due to the radiant heat of the light source can be prevented, and poor curing of the ink can be suppressed.

Irradiation with ultraviolet rays is performed so that the peak illuminance on the image surface of ultraviolet rays having a wavelength in the range of 370 to 410 nm will be preferably in the range of 0.5 to 10 $W/cm^2$, and more preferably in the range of 1 to 5 $W/cm^2$. From the viewpoint of suppressing the irradiation of the ink with radiant heat, the amount of light applied to the image is preferably less than 350 $mJ/cm^2$.

Irradiation with the active ray is preferably performed within 0.001 to 1.0 seconds after the ink lands, and more preferably within 0.001 to 0.5 seconds to form a high-definition image.
The irradiation with the active ray in the first active ray irradiation step can be performed in two stages. In this case, irradiation with the active ray can be first performed within 0.001 to 2.0 seconds after the ink lands, and irradiation with the active ray can be further performed after all printing is completed to bring the rate of polymerization of the photopolymerizable compound of the ink that constitutes the printing layer to the range of 5% to 80%. By dividing the irradiation with the active ray into two stages, the shrinkage of the non-absorbent or slightly absorbent base material due to the progress of the polymerization is less likely to occur.
Regarding the rate of polymerization in the first active ray irradiation step, from the viewpoint of suitably achieving both improvement in laminate adhesion and improvement in image quality, it has been found that there is a further preferable range according to the formulation of the ink as described below.
When the ink is radical-curable, the rate of polymerization of the photopolymerizable compound of the ink that constitutes the printing layer is preferably brought to the range of 20% to 70% in the first active ray irradiation step.
When the ink contains a gelling agent and is radical-curable, the rate of polymerization of the photopolymerizable compound of the ink that constitutes the printing layer is preferably brought to the range of 5% to 70% in the first active ray irradiation step.
When the ink is cation-curable, the rate of polymerization of the photopolymerizable compound of the ink that constitutes the printing layer is preferably brought to the range of 20% to 80% in the first active ray irradiation step.
When the ink contains a gelling agent and is cation-curable, the rate of polymerization of the photopolymerizable compound of the ink that constitutes the printing layer is preferably brought to the range of 5% to 80% in the first active ray irradiation step.
As described above, when the ink contains a gelling agent, both improvement in laminate adhesion and improvement in image quality can be suitably achieved even at a lower rate of polymerization (for example, a rate of polymerization of less than 20%) compared to the case where the ink does not contain a gelling agent.
When the ink is cation-curable, both improvement in laminate adhesion and improvement in image quality can be suitably achieved even at a higher rate of polymerization (for example, a rate of polymerization of more than 70%) compared to the case where the ink is radical-curable.
The rate of polymerization of the photopolymerizable compound is an index indicating the cured state of the ink, and is quantified (converted into numbers) as the reaction rate of the photopolymerizable compound. Such a reaction rate of the photopolymerizable compound, that is, the rate of polymerization corresponds to the reduction rate of unreacted reactive groups in the photopolymerizable compound. For example, the rate of polymerization of an ink that is radical-curable can be quantified according to the Formula below by measuring the absorbance of the infrared absorption peak at around 810 $cm^{-1}$ derived from an ethylenically unsaturated group before and after polymerization, and the rate of polymerization of an ink that is cation-curable can be quantified according to the Formula below by measuring the absorbances of the infrared absorption peak at around 986 $cm^{-1}$ derived from an oxetanyl group and around 750 $cm^{-1}$ derived from an epoxetal group before and after polymerization.

$$\text{Rate of polymerization (\%)} = ([A_0 - A_1]/A_0) \times 100$$

[In the Formula above, $A_0$ is the absorbance before polymerization and $A_1$ is the absorbance after polymerization.]

[Lamination step]

In the lamination step, a laminate film is laminated on the printing layer with an adhesive layer interposed between the laminate film and the printing layer.
A resin film can be used as the laminate film. The resin that constitutes the resin film is not particularly limited, and examples thereof include polyethylene terephthalate, nylon, polyvinyl chloride, polyethylene, polypropylene, and triacetyl cellulose.
A known method can be used as the laminating method. Specific examples thereof include dorami lamination, wet lamination, non-solvent lamination, hot melt lamination, extrusion lamination, and thermal lamination.
In lamination, it is important to interpose an adhesive layer between the printing layer and the laminate film. Due to this, the components of the adhesive layer can permeate into the ink having the rate of polymerization of the photopolymerizable compound in the range of 5% to 80%, and the anchor effect can be exhibited.
As the adhesive layer, for example, a hot melt type, a solvent type, an aqueous type, a two-component curing type, and the like can be used. Examples of the components of the adhesive layer include an olefin resin, a polyester resin, a vinyl acetate resin, an acrylic resin, an ethylene/vinyl acetate copolymer, a vinyl chloride/vinyl acetate copolymer, polyamide, polyvinyl acetal, polyvinyl alcohol, a urea resin, a melamine resin, a phenol resin, an epoxy resin, polyurethane,

and isocyanate. The adhesive layer can be composed of one type or multiple types of components.

When an adhesive layer is interposed between the printed matter and the laminate film, for example, the laminate film can be laminated after forming the adhesive layer on the printing layer. A laminate film on which an adhesive layer is formed in advance can be also laminated on the printing layer.

The temperature during the lamination is preferably not less than the melting point of the components of the adhesive layer. When the adhesive layer contains multiple types of the components, the temperature during the lamination is preferably not less than the melting point of at least one component. Thereby, the components of the adhesive layer are likely to permeate into the ink having the rate of polymerization of the photopolymerizable compound in the range of 5% to 80%, and the anchor effect is satisfactorily exhibited. The temperature during the lamination is preferably not less than the softening point of the laminate film. The softening point is a value measured according to JIS K2207.

[Second active ray irradiation step]

In the second active ray irradiation step, the printing layer is irradiated with an active ray from the laminate film side or the non-absorbent or slightly absorbent base material side to further increase the rate of polymerization of a photopolymerizable compound of the ink that constitutes the printing layer.

In the case of irradiation from the laminate film side, the printing layer can be irradiated with the active ray via the laminate film and the adhesive layer. Meanwhile, in the case of irradiation from the non-absorbent or slightly absorbent base material side, the printing layer can be irradiated with the active ray via the non-absorbent or slightly absorbent base material. Irradiation can be performed from the side that more easily transmit the active ray of the laminate film side and the non-absorbent or slightly absorbent base material side.

By further advancing the polymerization of the photopolymerizable compound in the second active ray irradiation step, the ink is cured with the ink being permeated with the components of the adhesive layer, and the anchor effect is exhibited. By this anchor effect, a strong mechanical bond is formed on the adhesive interface, and the laminate adhesion is improved.

Further, by further advancing the polymerization of the photopolymerizable compound in the second active ray irradiation step, the printing layer is prevented from being peeled from the non-absorbent or slightly absorbent base material, and the image durability is also improved.

For the type of the active ray, the irradiation instrument, and the like in the second active ray irradiation step, the description of the first active ray irradiation step can be quoted. The irradiation with the active ray in the second active ray irradiation step can be also performed in two stages as in the first active ray irradiation step.

Printed matter can be produced as described above. The printed matter is composed of a non-absorbent or slightly absorbent base material, a printing layer provided on the non-absorbent or slightly absorbent base material, an adhesive layer provided on the printing layer, and a laminate film provided on the adhesive layer. In such printed matter, a laminate film having excellent adhesion suitably protects a printing layer having excellent image quality.

One or more additional layers can be laminated on the printed matter, and for example, a core layer (core base material) can be laminated on the back surface of the non-absorbent or slightly absorbent base material (the surface opposite to the surface on which the printing layer is formed). The core layer can function as a support layer, a reinforcing layer, or the like for printed matter.

The use of the printed matter is not particularly limited, and the printed matter can be widely used for various uses. As an example, the printed matter can constitute a floor material (decorative laminate floor material) and the like.

Examples

Though Examples of the present invention will be described below, the present invention is not limited to these Examples.

In the following description, the compounding amount represented by "parts" means parts by mass.

1. Preparation of ink

(1) Pigment dispersion

[Pigment dispersion A-1 (radical)]

A dispersant ("PB824" manufactured by Ajinomoto Fine-Techno Co.,Inc.) (9 parts) and triethylene glycol divinyl ether (abbreviated as TEGVE, manufactured by NIPPON CARBIDE INDUSTRIES CO.,INC.) (71 parts) were placed in a stainless steel beaker, and heated and stirred for 1 hour to be dissolved while heating the mixture on a hot plate at 65°C. The mixture was cooled to room temperature, then 20 parts of a pigment (pigment Black 7, "# 52" manufactured

by Mitsubishi Chemical Corporation) was added, the mixture was placed in a glass bottle together with 200 g of zirconia beads having a diameter of 0.5 mm, tightly stoppered, and dispersed with a paint shaker for 5 hours, and then the zirconia beads were removed to obtain a pigment dispersion A-1 (radical).

[Pigment dispersion A-2 (radical)]

Pigment dispersion A-2 (radical) was obtained in the same manner as in the above-mentioned "pigment dispersion A-1 (radical)" except that the pigment was changed to pigment Blue 15:4 ("CHROMOFINE BLUE 6332JC" manufactured by Dainichiseika Color & Chemicals Mfg.Co.,Ltd.).

[Pigment dispersion B-1 (cation)]

A dispersant ("PB822" manufactured by Ajinomoto Fine-Techno Co.,Inc.) (8 parts) and a polymerizable compound ("OXT221" manufactured by TOAGOSEI CO., LTD.) (72 parts) were placed in a stainless steel beaker, and heated and stirred for 1 hour to be dissolved while heating the mixture on a hot plate at 65°C. The mixture was cooled to room temperature, then 20 parts of a pigment (pigment Black 7, ("#52" manufactured by Mitsubishi Chemical Corporation)) was added, the mixture was placed in a glass bottle together with 200 g of zirconia beads having a diameter of 0.5 mm, tightly stoppered, and dispersed with a paint shaker for 5 hours, and then the zirconia beads were removed to obtain a pigment dispersion B-1 (cation).

[Pigment dispersion B-2 (cation)]

Pigment dispersion B-2 (cation) was obtained in the same manner as in the above-mentioned "pigment dispersion B-1 (cation)" except that the pigment was changed to pigment Blue 15 : 4 ("CHROMOFINE BLUE 6332JC" manufactured by Dainichiseika Color & Chemicals Mfg.Co.,Ltd.).

(2) Ink

The above-mentioned pigment dispersion was compounded together with the following ink components according to the formulation (ink composition) shown in Tables 1 and 2 (Table 1 corresponds to the ink that is radical-curable and Table 2 corresponds to the ink that is cation-curable), and the mixture was heated to 80°C, stirred, and mixed. Then, while heating this mixed solution, filtration was performed with a Teflon (registered trademark) 3 μm membrane filter manufactured by ADVANTEC to obtain ink samples 1 to 3, 8 to 12, 18 to 20, and 27 to 31. When a gelling agent was contained as an ink component, the stirring temperature was changed to 90°C to obtain ink samples 4 to 7, 13 to 17, 21 to 26, and 32 to 36. There was no substantial change in the ink composition before and after the filtration.

[Photopolymerizable compound: radically polymerizable compound]

- N-vinyl caprolactam
- Phenoxyethyl acrylate ("V#192" manufactured by OSAKA ORGANIC CHEMICAL INDUSTRY LTD.)
- Polyethylene glycol diacrylate ("NK Ester A-400" manufactured by SHIN-NAKAMURA CHEMICAL CO, LTD.)
- Caprolactone-modified dipentaerythritol hexaacrylate ("DPCA-30" manufactured by OSAKA ORGANIC CHEMICAL INDUSTRY LTD.)

[Photopolymerizable compound: cationically polymerizable compound]

- Di(1-ethyl-3-oxetanyl)methyl ether
- 3 -Ethyl-3 -(2-ethylhexyloxymethyl)oxetane
- Alicyclic epoxy compound ("Celloxide 2021P" manufactured by Daicel Corporation)

[Photoinitiator: photoradical generator]

- 2,4,6-trimethylbenzoyl-diphenyl-phosphine oxide ("DAROCURE TPO" manufactured by BASF)
- Phenylbis(2,4,6-trimethylbenzoyl)phosphine oxide ("IRGACURE 819" manufactured by BASF)

[Photoinitiator: photo-acid generator]

Propylene carbonate of triallyl sulfonium salt ("CPI-100P" manufactured by San-Apro Ltd.)

[Gelling agent]

- 12-Hydroxystearic acid
- Stearone (made by Kao Corporation)

[Surfactant]

- Silicone surfactant ("X-22-4272" manufactured by Shin-Etsu Chemical Co., Ltd.)

2. Print step

A printing layer was formed on a non-absorbent base material (hard PVC film) according to the following procedure by ink jet printing using each of the obtained ink samples.

As an ejection recording head of the inkjet recording device, a piezo head having a nozzle diameter of 20 μm and 512 nozzles (256 nozzles × 2 rows, staggered arrangement, 1 row nozzle pitch: 360 dpi) was used.

The temperature of the inkjet head was set at 45°C for ink samples 1 to 3, 8 to 12, 18 to 20, and 27 to 31, and 80°C for ink samples 4 to 7, 13 to 17, 21 to 26, and 32 to 36. The ink was ejected from the inkjet head under the condition of the amount of one drop of 12 pl and an ejection speed of the drop of about 6 m/s, and recording was performed at a resolution of 720 dpi × 720 dpi. The recording speed was 50 m/min. Image formation was performed under an environment of 23°C and 55% RH. dpi represents the number of dots per 2.54 cm.

3. First active ray irradiation step

After the print step, the printing layer was irradiated with an active ray using an LED lamp (manufactured by Phoseon Technology, 395 nm, water-cooled LED) placed in the downstream part of the inkjet recording device to bring the rate of polymerization of a photopolymerizable compound of the ink that constitutes the printing layer to the value shown in Tables 1 and 2. The rate of polymerization was adjusted by appropriately changing the irradiation conditions (amount of light of the LED light source and LED irradiation time).

4. Lamination step

After the first active ray irradiation step, a laminate film was laminated on the printing layer with an adhesive layer interposed between the laminate film and the printing layer. The material of the laminate film was polyvinyl chloride (melting point: 140 to 200°C). Polyester (softening point: 120°C) was used as a component of the adhesive layer. The temperature of the lamination was set at 160°C

5. Second active ray irradiation step

After the laminating step, the printing layer was irradiated with an active ray (ultraviolet ray) from the laminate film side to further increase the rate of polymerization of the photopolymerizable compound of the ink that constitutes the printing layer. Irradiation with an active ray was performed using the same instrument as in the first active ray irradiation step. For the ink samples 10 to 12, 15 to 17, 29 to 31, and 34 to 36, the second active ray irradiation step was omitted.

As described above, the printed matter corresponding to each ink sample was obtained.

6. Evaluation method

(1) Laminate adhesion (peel test)

For the printed matter obtained as described above, the peel strength between the laminate film and the printing base material (composed of a non-absorbent base material and a printing layer) was measured with a peeling tester to evaluate the laminate adhesion according to the following evaluation criteria. The printed matter subjected to the peeling test had a printing layer printed to have a 100% solid image in the print step.

[Evaluation criteria]

4: Peeling strength is 10 N/cm or more
3: Peeling strength is 7 N/cm or more and less than 10 N/cm
2: Peeling strength is 3 N/cm or more and less than 7 N/cm
1: Peeling strength is less than 3 N/cm

(2) Image quality (dot collapse)

For the printed matter obtained as described above, the rate of change of the ink dot diameter (dot diameter) before and after the lamination step was measured, and the image quality was evaluated according to the following evaluation criteria. The printed matter subjected to the evaluation test of the image quality had a printing layer printed to have a discrete dot image (adjacent dots are independent of each other) in the print step. The rate of change of the dot diameter was determined by Rate of change [%] = $(R_1/R_0) \times 100$ (in the formula, $R_0$ is the dot diameter before the lamination step, and $R_1$ is the dot diameter after the lamination step).

[Evaluation criteria]

3: The rate of change of the dot diameter is within 150%
2: The rate of change of the dot diameter is 150% or more and less than 200%.
1: The rate of change of the dot diameter is 200% or more.

(3) Image durability

The printed matter obtained as described above was irradiated with xenon light with a xenon fade meter for a total of 300 hours by repeating the following cycles (a) to (c). (a) Irradiation with light of 70,000 lux for 3 hours and 55 minutes, (b) Water spray for 5 minutes with irradiation with light of 70,000 lux, and (c) Turning off of the light and heating at 60°C/95% RH for 4 hours. Then, the printed matter was visually observed to evaluate the image durability according to the following evaluation criteria.

[Evaluation criteria]

2: The printing layer and the non-absorbent base material are peeled off each other.
1: No big change

The larger the number in each evaluation criteria of the laminate adhesion, the image quality, and the image durability shown above, the better the evaluation, and "1" is practically not preferable.
The results are shown in Tables 1 and 2.

[Table 1]

| Ink (radical-curable) | | | Sample 1 | Sample 2 | Sample 3 | Sample 4 | Sample 5 | Sample 6 | Sample 7 | Sample 8 | Sample 9 | Sample 10 | Sample 11 | Sample 12 | Sample 13 | Sample 14 | Sample 15 | Sample 16 | Sample 17 |
|---|---|---|---|---|---|---|---|---|---|---|---|---|---|---|---|---|---|---|---|
| Ink composition (parts by mass) | Photopolymerizable compound (radical) | N-vinylcaprolactam | 34.3 | 34.3 | 34.3 | 29.3 | 31.8 | 29.3 | 32.3 | 44.3 | 44.3 | 44.3 | 44.3 | 44.3 | 42.3 | 41.3 | 39.3 | 42.3 | 39.3 |
| | | Phenoxyethyl acrylate | 20 | 20 | 20 | 20 | 20 | 20 | 20 | 10 | 10 | 10 | 10 | 10 | 10 | 10 | 10 | 10 | 10 |
| | | Polyethylene glycol diacrylate | 10 | 10 | 10 | 10 | 10 | 10 | 10 | 10 | 10 | 10 | 10 | 10 | 10 | 10 | 10 | 10 | 10 |
| | | Caprolactone-modified dipentaerythritol hexaacrylate | 15 | 15 | 15 | 15 | 15 | 15 | 15 | 15 | 15 | 15 | 15 | 15 | 15 | 15 | 15 | 15 | 15 |
| | Photoinitiator (photo-radical generator) | DAROCURE TP0 | 4 | 4 | 4 | 4 | 4 | 4 | 4 | 4 | 4 | 4 | 4 | 4 | 4 | 4 | 4 | 4 | 4 |
| | | IRGACURE 819 | 4 | 4 | 4 | 4 | 4 | 4 | 4 | 4 | 4 | 4 | 4 | 4 | 4 | 4 | 4 | 4 | 4 |
| | Gelling agent | 12-Hydroxystearic acid | | | | 5 | 2.5 | 5 | 1 | | | | | | 2 | 3 | 5 | 1 | 5 |
| | | Stearone | | | | | | | 1 | | | | | | | | | 1 | |
| | Pigment dispersion | A-1 | 12.5 | 12.5 | 12.5 | 12.5 | 12.5 | 12.5 | 12.5 | 12.5 | 12.5 | 12.5 | 12.5 | 12.5 | 12.5 | 12.5 | 12.5 | 12.5 | 12.5 |
| | Surfactant | X-22-4272 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| | Total parts by mass of ink jet ink | | 45.7 | 45.7 | 45.7 | 50.7 | 48.2 | 50.7 | 47.7 | 100 | 100 | 100 | 100 | 100 | 100 | 100 | 100 | 100 | 100 |

(continued)

| Ink (radical-curable) | | Sample 1 | Sample 2 | Sample 3 | Sample 4 | Sample 5 | Sample 6 | Sample 7 | Sample 8 | Sample 9 | Sample 10 | Sample 11 | Sample 12 | Sample 13 | Sample 14 | Sample 15 | Sample 16 | Sample 17 |
|---|---|---|---|---|---|---|---|---|---|---|---|---|---|---|---|---|---|---|
| Irradiation condition | Rate of polymerization after the first active ray irradiation step (%) | 20 | 70 | 70 | 5 | 5 | 50 | 70 | 4 | 82 | 50 | 10 | 82 | 2 | 85 | 50 | 2 | 80 |
| | The second active ray irradiation step is performed or not performed | Performed | Performed | Performed | Performed | Performed | Performed | Performed | Performed | Performed | Not performed | Not performed | Not performed | Performed | Performed | Not performed | Not performed | Not performed |
| Evaluation | Laminate adhesion | 2 | 2 | 2 | 3 | 3 | 2 | 2 | 2 | 1 | 2 | 3 | 1 | 3 | 1 | 2 | 3 | 1 |
| | Image quality | 2 | 2 | 2 | 2 | 2 | 2 | 2 | 1 | 3 | 2 | 1 | 3 | 1 | 3 | 2 | 1 | 3 |
| | Image durability | 2 | 2 | 2 | 2 | 2 | 2 | 2 | 2 | 2 | 1 | 1 | 1 | 2 | 2 | 1 | 1 | 1 |
| Remarks | | Present invention | Present invention | Present invention | Present invention | Present invention | Present invention | Present invention | Comparison | Comparison | Comparison | Comparison | Comparison | Comparison | Comparison | Comparison | Comparison | Comparison |

[Table 2]

| Ink (cation-curable) | | | Sample 18 | Sample 19 | Sample 20 | Sample 21 | Sample 22 | Sample 23 | Sample 24 | Sample 25 | Sample 26 | Sample 27 | Sample 28 | Sample 29 | Sample 30 | Sample 31 | Sample 32 | Sample 33 | Sample 34 | Sample 35 | Sample 36 |
|---|---|---|---|---|---|---|---|---|---|---|---|---|---|---|---|---|---|---|---|---|---|
| Ink composition (parts by mass) | Photopolymerizable compound (cation) | Di(1-ethyl-3-oxetanyl)methyl ether | 59.8 | 59.8 | 59.8 | 54.8 | 57.3 | 54.8 | 57.3 | 54.8 | 57.8 | 59.8 | 59.8 | 59.8 | 59.8 | 59.8 | 57.8 | 56.8 | 54.8 | 57.8 | 54.8 |
| | | 3-Ethyl-3-(2-ethylhexyloxymethyl)oxetane | 10 | 10 | 10 | 10 | 10 | 10 | 10 | 10 | 10 | 10 | 10 | 10 | 10 | 10 | 10 | 10 | 10 | 10 | 10 |
| | | Alicyclic epoxy compound | 15 | 15 | 15 | 15 | 15 | 15 | 15 | 15 | 15 | 15 | 15 | 15 | 15 | 15 | 15 | 15 | 15 | 15 | 15 |
| | Photoinitiator (photo-acid generator) | CPI-100P | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| | Gelling agent | 12-Hydroxystearic acid | | | | 5 | 2.5 | 5 | 2.5 | 5 | 1 | | | | | | 2 | 3 | 5 | 1 | 5 |
| | | Stearone | | | | | | | | | 1 | | | | | | | | | 1 | |
| | Pigment dispersion | B-1 | 12.5 | 12.5 | 12.5 | 12.5 | 12.5 | 12.5 | 12.5 | 12.5 | 12.5 | 12.5 | 12.5 | 12.5 | 12.5 | 12.5 | 12.5 | 12.5 | 12.5 | 12.5 | 12.5 |
| | Surfactant | X-22-4272 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| | Total parts by mass of ink jet ink | | 100 | 100 | 100 | 100 | 100 | 100 | 100 | 100 | 100 | 100 | 100 | 100 | 100 | 100 | 100 | 100 | 100 | 100 | 100 |
| Irradiation condition | Rate of polymerization after the first active ray irradiation step (%) | | 20 | 50 | 80 | 5 | 5 | 50 | 50 | 80 | 80 | 4 | 85 | 50 | 10 | 85 | 3 | 85 | 50 | 3 | 85 |
| | The second active ray irradiation step is performed or not performed | | Performed | Performed | Performed | Performed | Performed | Performed | Performed | Performed | Performed | Performed | Performed | Not performed | Not performed | Not performed | Performed | Performed | Not performed | Not performed | Not performed |
| Evaluation | Laminate adhesion | | 3 | 3 | 3 | 4 | 4 | 3 | 3 | 3 | 3 | 3 | 1 | 2 | 3 | 1 | 3 | 1 | 2 | 3 | 1 |
| | Image quality | | 2 | 2 | 3 | 2 | 2 | 2 | 2 | 3 | 3 | 1 | 3 | 2 | 1 | 3 | 1 | 3 | 2 | 1 | 3 |
| | Image durability | | 2 | 2 | 2 | 2 | 2 | 2 | 2 | 2 | 2 | 2 | 2 | 1 | 1 | 1 | 2 | 2 | 1 | 1 | 1 |
| Remarks | | | Present invention | Present invention | Present invention | Present invention | Present invention | Present invention | Present invention | Present invention | Present invention | Comparison | Comparison | Comparison | Comparison | Comparison | Comparison | Comparison | Comparison | Comparison | Comparison |

7. Evaluation

Tables 1 and 2 show that by using the method for producing printed matter of the present invention, both improvement in laminate adhesion and improvement in image quality can be achieved. Tables 1 and 2 also show that the image durability can be improved while achieving both of these.

Reference Signs List

1 Non-absorbent or slightly absorbent base material
2 Printing layer
3 Adhesive layer
4 Laminate film

## Claims

1. A method for producing printed matter, comprising:

   a print step of forming a printing layer (2) on a non-absorbent or slightly absorbent base material (1) by ink jet printing using an ink that is active ray-curable;
   a first active ray irradiation step of irradiating the printing layer (2) with an active ray to bring a rate of polymerization of a photopolymerizable compound of the ink that constitutes the printing layer (2) to a range of 5% to 80%;
   a lamination step of laminating a laminate film (4) on the printing layer (2) with an adhesive layer (3) interposed between the laminate film (4) and the printing layer (2); and
   a second active ray irradiation step of irradiating the printing layer (2) with an active ray from the laminate film (4) side or the non-absorbent or slightly absorbent base material (1) side to further increase the rate of polymerization of a photopolymerizable compound of the ink that constitutes the printing layer (2).

2. The method for producing printed matter according to claim 1, wherein the ink contains a gelling agent.

3. The method for producing printed matter according to claim 2, wherein

   the ink is radical-curable, and
   in the first active ray irradiation step, the printing layer (2) is irradiated with an active ray to bring a rate of polymerization of a photopolymerizable compound of the ink that constitutes the printing layer (2) to a range of 5% to 70%.

4. The method for producing printed matter according to claim 2, wherein

   the ink is cation-curable, and
   in the first active ray irradiation step, the printing layer (2) is irradiated with an active ray to bring a rate of polymerization of a photopolymerizable compound of the ink that constitutes the printing layer (2) to a range of 5% to 80%.

5. The method for producing printed matter according to claim 1, wherein

   the ink is radical-curable, and
   in the first active ray irradiation step, the printing layer (2) is irradiated with an active ray to bring a rate of polymerization of a photopolymerizable compound of the ink that constitutes the printing layer (2) to a range of 20% to 70%.

6. The method for producing printed matter according to claim 1, wherein

   the ink is cation-curable, and
   in the first active ray irradiation step, the printing layer (2) is irradiated with an active ray to bring a rate of polymerization of a photopolymerizable compound of the ink that constitutes the printing layer (2) to a range of

20% to 80%.

## Patentansprüche

1. Verfahren zur Herstellung von Druckerzeugnissen, umfassend:

    einen Druckschritt des Bildens einer Druckschicht (2) auf einem nicht-absorbierenden oder leicht-absorbierenden Basismaterial (1) durch Tintenstrahldrucken unter Verwendung einer Tinte, die durch aktive Strahlung härtbar ist;
    einen ersten Schritt der Bestrahlung der Druckschicht (2) mit aktiver Strahlung, um eine Polymerisationsrate einer photopolymerisierbaren Verbindung der Tinte, die die Druckschicht (2) bildet, in einen Bereich von 5 % bis 80 % zu bringen;
    einen Laminierungsschritt des Laminierens einer Laminatfolie (4) auf die Druckschicht (2) mit einer Klebstoffschicht (3), die zwischen der Laminatfolie (4) und der Druckschicht (2) eingefügt ist; und
    einen zweiten Schritt der Bestrahlung der Druckschicht (2) mit aktiver Strahlung von der Seite der Laminatfolie (4) oder der Seite des nicht-absorbierenden oder leicht-absorbierenden Basismaterials (1), um die Polymerisationsrate einer photopolymerisierbaren Verbindung der Tinte, die die Druckschicht (2) bildet, weiter zu erhöhen.

2. Verfahren zur Herstellung von Druckerzeugnissen nach Anspruch 1, wobei die Tinte ein Geliermittel enthält.

3. Verfahren zur Herstellung von Druckerzeugnissen nach Anspruch 2, wobei

    die Tinte radikalisch härtbar ist, und
    in dem ersten Schritt der Bestrahlung mit aktiver Strahlung die Druckschicht (2) mit einer aktiven Strahlung bestrahlt wird, um eine Polymerisationsrate einer photopolymerisierbaren Verbindung der Tinte, die die Druckschicht (2) bildet, in einen Bereich von 5 % bis 70 % zu bringen.

4. Verfahren zur Herstellung von Druckerzeugnissen nach Anspruch 2, wobei

    die Tinte kationisch härtbar ist, und
    in dem ersten Schritt der Bestrahlung mit aktiver Strahlung die Druckschicht (2) mit einer aktiven Strahlung bestrahlt wird, um eine Polymerisationsrate einer photopolymerisierbaren Verbindung der Tinte, die die Druckschicht (2) bildet, in einen Bereich von 5 % bis 80 % zu bringen.

5. Verfahren zur Herstellung von Druckerzeugnissen nach Anspruch 1, wobei

    die Tinte radikalisch härtbar ist, und
    in dem ersten Schritt der Bestrahlung mit aktiver Strahlung die Druckschicht (2) mit einer aktiven Strahlung bestrahlt wird, um eine Polymerisationsrate einer photopolymerisierbaren Verbindung der Tinte, die die Druckschicht (2) bildet, in einen Bereich von 20% bis 70% zu bringen.

6. Verfahren zur Herstellung von Druckerzeugnissen nach Anspruch 1, wobei

    die Tinte kationisch härtbar ist, und
    in dem ersten Schritt der Bestrahlung mit aktiver Strahlung die Druckschicht (2) mit einer aktiven Strahlung bestrahlt wird, um eine Polymerisationsrate einer photopolymerisierbaren Verbindung der Tinte, die die Druckschicht (2) bildet, in einen Bereich von 20 % bis 80 % zu bringen.

## Revendications

1. Procédé de fabrication de produits d’impression, comprenant

    une étape d’impression consistant à former une couche d’impression (2) sur un matériau de base (1) non absorbant ou légèrement absorbant par impression à jet d’encre en utilisant une encre qui est durcissable par rayonnement actif ;

une première étape d'irradiation par rayonnement actif consistant à irradier la couche d'impression (2) par un rayonnement actif pour amener un taux de polymérisation d'un composé photopolymérisable de l'encre qui constitue la couche d'impression (2) dans une plage de 5 % à 80 % ;
une étape de stratification consistant à stratifier un film stratifié (4) sur la couche d'impression (2) avec une couche adhésive (3) interposée entre le film stratifié (4) et la couche d'impression (2) ; et
une seconde étape d'irradiation par rayonnement actif consistant à irradier la couche d'impression (2) par un rayonnement actif à partir du côté du film stratifié (4) ou du côté du matériau de base (1) non absorbant ou légèrement absorbant pour augmenter encore le taux de polymérisation d'un composé photopolymérisable de l'encre qui constitue la couche d'impression (2).

**2.** Procédé de fabrication de produits d'impression selon la revendication 1, dans lequel l'encre contient un agent gélifiant.

**3.** Procédé de fabrication de produits d'impression selon la revendication 2, dans lequel

l'encre est durcissable par voie radicalaire, et
dans la première étape d'irradiation par rayonnement actif, la couche d'impression (2) est irradiée par un rayonnement actif pour amener un taux de polymérisation d'un composé photopolymérisable de l'encre qui constitue la couche d'impression (2) à une plage de 5 % à 70 %.

**4.** Procédé de fabrication de produits d'impression selon la revendication 2, dans lequel

l'encre est durcissable par voie cationique, et
dans la première étape d'irradiation par rayonnement actif, la couche d'impression (2) est irradiée par un rayonnement actif pour amener un taux de polymérisation d'un composé photopolymérisable de l'encre qui constitue la couche d'impression (2) à une plage de 5 % à 80 %.

**5.** Procédé de fabrication de produits d'impression selon la revendication 1, dans lequel

l'encre est durcissable par voie radicalaire, et
dans la première étape d'irradiation par rayonnement actif, la couche d'impression (2) est irradiée par un rayonnement actif pour amener un taux de polymérisation d'un composé photopolymérisable de l'encre qui constitue la couche d'impression (2) à une plage de 20 % à 70 %.

**6.** Procédé de fabrication de produits d'impression selon la revendication 1, dans lequel

l'encre est durcissable voie cationique, et
dans la première étape d'irradiation par rayonnement actif, la couche d'impression (2) est irradiée par un rayonnement actif pour amener un taux de polymérisation d'un composé photopolymérisable de l'encre qui constitue la couche d'impression (2) à une plage de 20 % à 80 %.

FIG. 1A

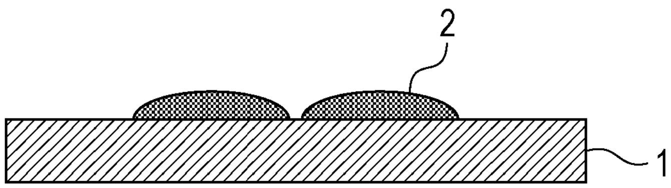


FIG. 1B

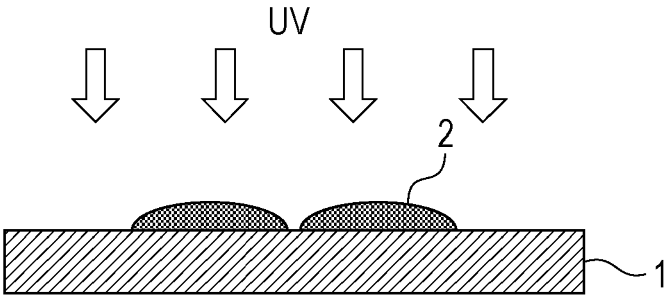


FIG. 1C

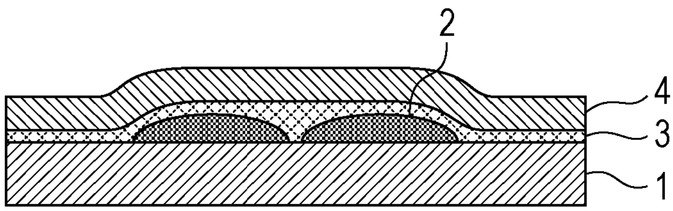


FIG. 1D

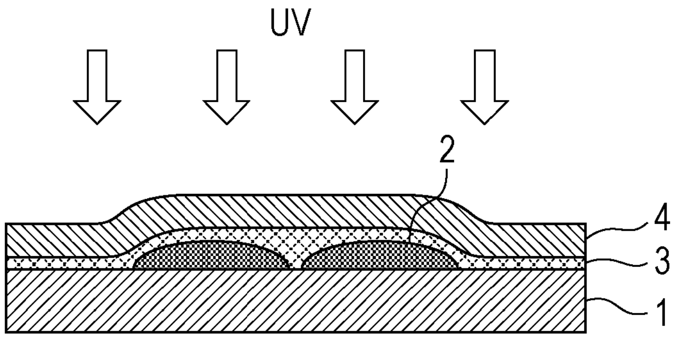

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016060049 A
- JP 2001220526 A
- JP 2001310937 A
- JP 2005255821 A


### Non-patent literature cited in the description


- MedChem Software (Release 3.54. Medicinal Chemistry Project. Pomona College, August 1991
- Chem Draw Ultra ver.8.0. CambridgeSoft Corporation, April 2003
- **C. HANSCH ; A. LEO.** Substituent Constants for Correlation Analysis in Chemistry and Biology. John Wiley & Sons, 1969
- Organic Materials for Imaging. Bun-Shin Co.,Ltd, 1993, 187-192